# FASCICULE DE BREVET EUROPEEN

(11) **EP 0 802 869 B1**
(45) Date de publication et mention de la délivrance du brevet: **31.10.2001**
(21) Numéro de dépôt: 95942742.8
(22) Date de dépôt: 13.12.1995
(51) Int. Cl.: B60T 13/565, B60T 7/06

(54) **ENSEMBLE D'UN SERVOMOTEUR PNEUMATIQUE D'ASSISTANCE AU FREINAGE ET D'UN MAITRE-CYLINDRE**
PNEUMATISCHE BREMSKRAFTVERSTÄRKER-HAUPTZYLINDEREINHEIT
PNEUMATIC BRAKE SERVO AND MASTER CYLINDER ASSEMBLY

(30) Priorité: 18.01.1995 FR 9500490
(43) Date de publication de la demande: 29.10.1997
(73) Titulaire: Bosch Systemes de Freinage, 93700 Drancy (FR)
(72) Inventeur: VERBO, Ulysse, F-93600 Aulnay-sous-Bois (FR); COBIANCHI, Flavio, 126, rue de Stalingrad F-93700 Drancy (FR)
(86) Numéro de dépôt international: FR9501666
(87) Numéro de publication internationale: WO9622209

(56) Documents cités:
- EP-A- 0 470 917
- DE-A- 3 533 420

## Description

La présente invention concerne les ensembles de freinage, constitués de servomoteurs pneumatiques d'assistance et de maîtres-cylindres, du type de ceux qui sont utilisés pour le freinage des véhicules automobiles.

Les servomoteurs pneumatiques comportent de façon classique une enveloppe fixée sur une paroi séparant l'habitacle d'un compartiment avant d'un véhicule, et sont actionnés par une tige de commande dont l'extrémité arrière est reliée à une pédale de freinage située dans cet habitacle.

Parallèlement, les maîtres-cylindres comportent de façon classique un corps formé avec au moins une bride de fixation du maître-cylindre sur la paroi avant de l'enveloppe du servomoteur.

De nombreux documents illustrent ce type d'ensembles de freinage. Ils sont habituellement disposés dans le compartiment avant d'un véhicule automobile, contenant généralement le moteur du véhicule, le servomoteur étant fixé par sa paroi arrière sur le tablier de séparation entre ce compartiment avant et l'habitacle, et le maître-cylindre étant fixé sur la paroi avant du servomoteur. La tige de commande du servomoteur traverse une ouverture du tablier et elle est actionnée par une pédale de freinage dans l'habitacle.

Lors d'une collision frontale ou quasi-frontale du véhicule avec un autre véhicule ou avec un obstacle fixe, la structure et la carrosserie du véhicule sont conçus pour se déformer progressivement pour absorber la plus grande partie possible de l'énergie mise en jeu dans cette collision.

Il est néanmoins fréquent que le moteur, ou la charge transportée dans le compartiment avant du véhicule, recule sous l'effet d'une telle collision et vienne interférer avec le maître-cylindre. Une telle interférence peut résulter en l'application sur le maître-cylindre d'une force dirigée selon son axe, ou d'une force faisant un certain angle avec son axe. Il en résulte cependant dans tous les cas que le maître-cylindre sollicite vers l'arrière, par l'intermédiaire de ses brides de fixation, l'enveloppe du servomoteur vers le tablier du véhicule.

Il s'ensuit donc qu'une collision frontale ou quasi-frontale a pour conséquences, du fait de la disposition de l'ensemble servomoteur/maître-cylindre dans le compartiment avant du véhicule, de faire d'abord reculer le tablier sous l'action de l'enveloppe du servomoteur, que le servomoteur soit équipé de tirants ou non, et de faire également reculer la pédale de frein, pouvant occasionner des blessures importantes au conducteur du véhicule.

Divers documents ont déjà tenté d'apporter une solution à ce problème. Le document FR-A-2 437 337 par exemple prévoit que le secteur de tablier placé au dessus de l'espace où le conducteur place ses pieds se situe le plus près possible de la direction, et que le secteur frontal de tablier se prolonge vers l'avant jusqu'à un point fixe d'articulation prévu dans le compartiment avant, point auquel est fixé un support destiné à recevoir un ensemble de freinage tel que défini plus haut, ce support étant conformé et disposé de telle sorte que sous l'effet d'une poussée importante, il puisse pivoter autour de ce point fixe d'articulation.

Le document FR-A-2 482 547 prévoit quant à lui de fixer le servomoteur au pot supérieur d'une structure anti-chocs, l'axe de la pédale de freinage étant monté au sommet du pot supérieur qui aboutit, par un décrochement, à un pot inférieur plus grand et déformable raccordé au tablier, le pot inférieur étant conformé de façon telle qu'à sa partie supérieure, la course de déformation disponible soit plus grande qu'à sa partie inférieure.

Ces deux documents de l'art antérieur prévoient donc essentiellement la même solution, à savoir d'interposer entre le servomoteur et le tablier une structure basculante ou déformable pour absorber l'énergie engendrée au cours de la collision. Une telle solution présente toutefois un inconvénient important dans le cas où le compartiment avant constitue le compartiment moteur du véhicule. En effet, dans ce cas, la complexité des moteurs modernes, de même que la compacité des véhicules désirée par les constructeurs automobiles, font qu'il n'existe que peu ou pas de place disponible dans ce compartiment moteur pour y disposer des équipements supplémentaires.

La présente invention a donc pour objet de résoudre ce problème, en proposant un ensemble de freinage, constitué d'un servomoteur pneumatique et d'un maître-cylindre, chacun étant du type rappelé ci-dessus, cet ensemble étant tel qu'une interférence du moteur ou de la charge transportée dans le compartiment avant du véhicule avec le maître-cylindre ne soit pas transformée en une projection de la pédale de freinage vers le conducteur du véhicule, et ceci sans utiliser d'éléments additionnels qui allongeraient la longueur axiale de l'ensemble de freinage en avant du tablier.

Dans ce but, selon la présente invention, un tel ensemble comporte en outre au moins un élément agressif pour l'enveloppe du servomoteur lors d'une rotation du maître-cylindre par rapport au servomoteur sous l'effet d'un couple de rotation appliqué au maître-cylindre en réponse à une sollicitation importante de ce dernier.

De la sorte, la déformation de la paroi avant du servomoteur devient très importante, et permet une rotation du maître-cylindre par rapport au servomoteur également très importante avant que ses effets ne se fassent sentir sur le tablier du véhicule et sur la pédale de freinage.

D'autres buts, caractéristiques et avantages de la présente invention ressortiront plus clairement de la description qui suit d'un exemple de réalisation donné à titre illustratif, en référence aux dessins annexés sur lesquels:
- La Figure 1 représente une vue d'un ensemble de freinage constitué d'un servomoteur pneumatique d'assistance au freinage et d'un maître-cylindre, réalisé conformément à la présente invention;
- La Figure 2 représente une vue en coupe partielle d'un ensemble de freinage, réalisé conformément à un second mode de réalisation de la présente invention, et
- La Figure 3 représente une vue partielle en plan selon la direction III-III de la Figure 2

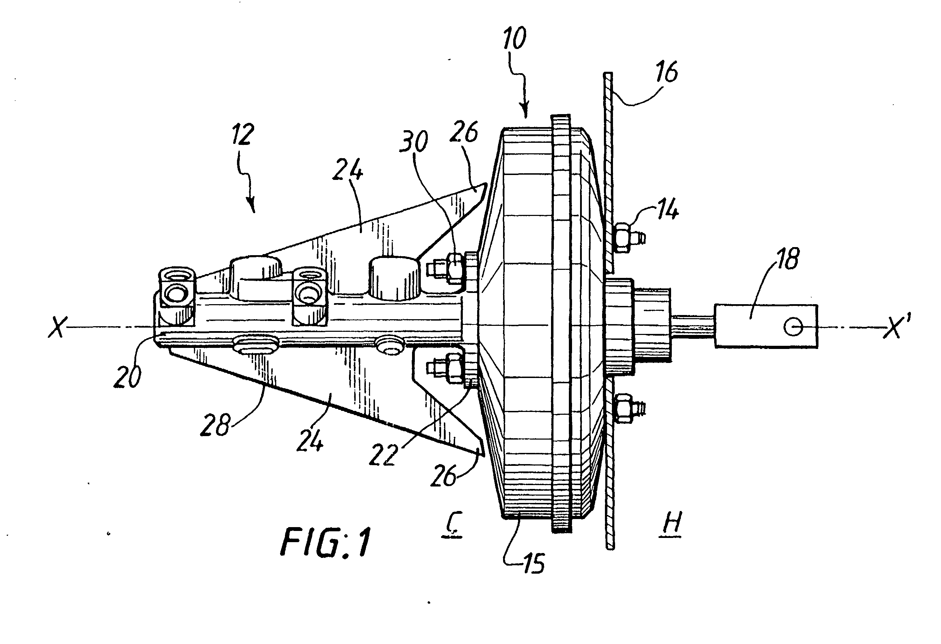

La Figure 1 représente une vue d'un ensemble de freinage, constitué d'un servomoteur pneumatique d'assistance au freinage, désigné dans son ensemble par la référence 10, et d'un maître-cylindre, désigné dans son ensemble par la référence 12.

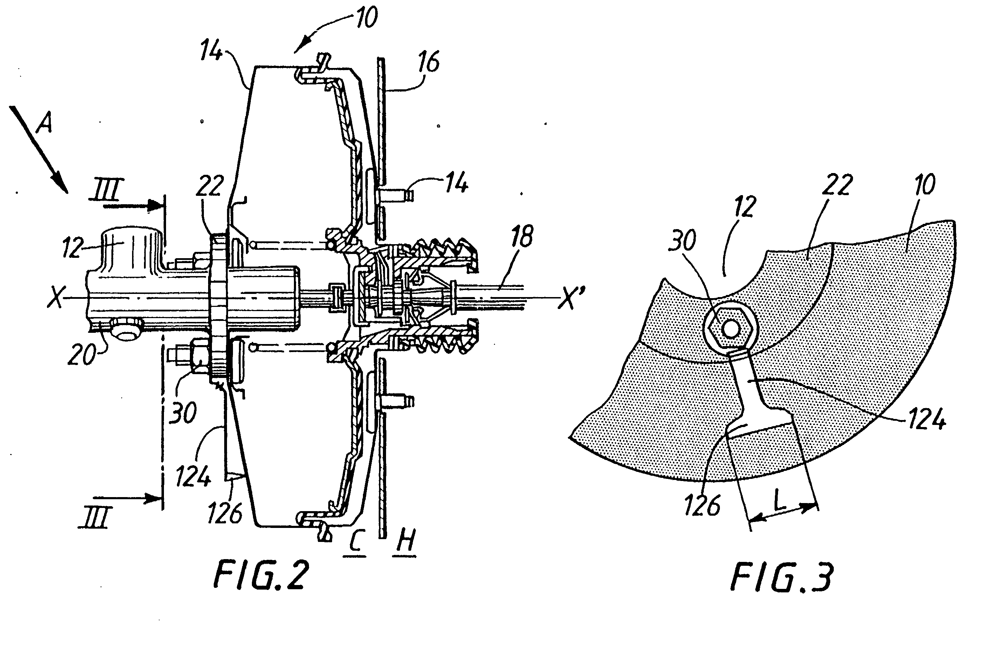

Par convention, on appelle "avant" de l'ensemble servomoteur/maître-cylindre la partie de ce dernier tournée vers le maître-cylindre 12 et "arrière" de cet ensemble la partie tournée vers l'habitacle. Sur les Figures 1 et 2, l'avant est ainsi à gauche et l'arrière à droite.

Le servomoteur 10 comporte une enveloppe 15 qui est prévue pour être fixée de façon habituelle au moyen d'écrous 14 sur un tablier 16 de séparation entre un compartiment avant C d'un véhicule et l'habitacle H de ce véhicule et pour être actionné par une tige de commande 18 reliée à une pédale de freinage (non représentée) située dans cet habitacle. Le maître-cylindre 12 commandant le circuit de freinage hydraulique du véhicule comporte un corps 20 prévu pour être fixé sur la paroi avant du servomoteur 10 par l'intermédiaire d'une bride de fixation 22, dans l'axe X-X' du servomoteur.

La structure interne et le fonctionnement du servomoteur et du maître-cylindre sont tout à fait classiques et ne font pas partie de la présente invention. Ils ne seront donc pas décrits en détail. On rappellera seulement que le servomoteur 10 est prévu pour transmettre au maître-cylindre 12 une force d'actionnement, égale à la force d'entrée appliquée sur la tige de commande 18, augmentée d'une force d'assistance, générée à l'intérieur du servomoteur en contrôlant une différence de pressions agissant sur les deux faces d'un piston pneumatique.

On comprend donc que, dans une telle disposition, qui est la plus couramment utilisée, le servomoteur et le maître-cylindre sont situés dans le prolongement l'un de l'autre, et qu'il en résulte que le maître-cylindre forme une saillie perpendiculaire an tablier et dont l'extrémité avant est située à une distance importante du tablier, pouvant par exemple atteindre 40 cm.

On conçoit donc que cette extrémité soit d'autant plus susceptible, lors d'une collision du véhicule, d'être heurtée violemment par une pièce du moteur ou par un élément de la charge transportée dans le compartiment C.

Un tel choc est alors intégralement répercuté par le corps 20 du maître-cylindre sur l'enveloppe 15 du servomoteur, et par celle-ci sur le tablier 16, et d'autre part par leurs composants internes sur la tige de commande 18 et finalement sur la pédale de frein.

La présente invention évite cet inconvénient. Ainsi qu'on l'a représenté sur la Figure 1, le corps 20 du maître-cylindre 12 comporte deux ailes 24. Ces ailes peuvent être venues de fonderie avec le corps du maître-cylindre, ou être solidarisées à ce corps par tout procédé approprié, par exemple par soudage ou vissage sur le corps du maître-cylindre, ou encore constituer une structure emmanchée à force sur le corps du maître-cylindre.

Les ailes 24 comportent chacune une extrémité arrière 26 située, lorsque l'ensemble est opérationnel, au voisinage de la paroi avant de l'enveloppe 15 du servomoteur, par exemple sensiblement dans le plan de la bride de fixation 22, écartée de l'axe de symétrie X-X' du maître-cylindre et de l'ensemble, et formant une pointe ou un biseau dirigé vers l'arrière, c'est à dire vers l'enveloppe 15 du servomoteur, de façon à former un élément agressif pour cette enveloppe, dans l'hypothèse où il se produirait une rotation du maître-cylindre par rapport au servomoteur consécutive à une collision.

Les ailes 24 peuvent avantageusement comporter de plus un bord extérieur 28, reliant les extrémités 26 à une région du corps 20 située en avant du plan contenant ces extrémités 26, par exemple à l'extrémité avant du corps 20 comme on l'a représenté sur la Figure 1. Les ailes 24 ont ainsi la forme de la lettre grecque Delta.

Lors d'une collision frontale ou quasi-frontale du véhicule équipé d'un tel ensemble de freinage, la force engendrée par un composant du moteur ou un élément de la charge transportée dans le compartiment avant C venant interférer avec le maître-cylindre 12 aura pour conséquence première d'appliquer un couple de rotation au corps du maître-cylindre 12, et de faire tourner celui-ci autour d'un axe de rotation situé sensiblement dans la zone de la bride de fixation 22.

Au cours de cette rotation, une des extrémités 26 d'une des ailes 24 va d'abord se rapprocher de la paroi avant de l'enveloppe 15 du servomoteur, puis entrer en contact avec cette dernière, et la forme agressive de l'extrémité 26 va alors déformer localement cette paroi avant de façon très importante, facilitant ainsi une rotation plus importante du servomoteur.

De plus, la forme en pointe ou en biseau de l'extrémité 26 lui confère un caractère encore plus agressif envers l'enveloppe 15 du servomoteur si la rotation du maître-cylindre se poursuit encore, et la paroi avant de l'enveloppe 15 va alors se trouver perforée ou transpercée, permettant une pénétration de l'extrémité 26 à l'intérieur du servomoteur, et constituant une amorce de déchirure facilitant encore plus la rotation ultérieure du maître-cylindre par rapport au servomoteur.

La ou les ailes 24 seront bien entendu disposées de façon diamétralement opposée, par rapport à l'axe X-X', à la direction la plus probable d'où peut venir une interférence en cas de collision. Il sera cependant préférable de disposer trois ailes 24, disposées à 120 degrés autour de l'axe X-X', pour être assuré qu'en tous les cas, au moins une aile, et généralement deux, produiront les effets décrits ci-dessus.

On notera de plus que pour une interférence provenant d'une direction parallèle à l'axe X-X' ou faisant un angle faible avec cet axe, la forme du bord extérieur 28 confère à l'aile 24 une fonction de déflecteur, et impose dans ce cas une rotation initiale au corps du maître-cylindre, avec les conséquences qui ont été décrites ci-dessus. Le profil du bord extérieur 28 de l'aile 24 pourra être rectiligne comme on l'a représenté, ou en variante pourra être curviligne concave ou convexe selon que l'on désire privilégier la rotation du corps du maître-cylindre au début ou à la fin de l'interférence avec un élément du compartiment avant C.

On comprend donc bien que l'élément du compartiment avant C qui était venu interférer avec le maître-cylindre 12 peut ainsi reculer vers le tablier d'une distance correspondant environ à la longueur du maître-cylindre en avant du servomoteur, sans avoir d'action ni sur le tablier ni sur la pédale de frein. Une telle distance est considérée comme suffisante dans la grande majorité des cas de collision constatés.

La déformation progressive de la paroi avant de l'enveloppe 15 du servomoteur, puis sa perforation et sa déchirure, sous l'effet de la rotation du maître-cylindre, contribuent de plus à absorber une partie de l'énergie de l'élément du compartiment avant C qui était venu interférer avec le maître-cylindre.

On a représenté sur les Figures 2 et 3 un second mode de réalisation de l'invention. On voit sur ces Figures que la bride de fixation 22 du maître-cylindre comporte une patte radiale 124, dont l'extrémité radialement extérieure 126 est repliée vers l'arrière. Le bord arrière est usiné pour former une pointe, ou un poinçon, de longueur L prédéterminée dans le sens circonférentiel selon le caractère agressif que l'on désire lui conférer.

De la même façon que dans le mode de réalisation précédent, l'extrémité 126 est située sensiblement dans le plan de la bride de fixation 22, au voisinage de la paroi avant de l'enveloppe 15 du servomoteur 10, et écartée de l'axe de symétrie X-X' du maître-cylindre 12 et du servomoteur 10.

On pourra bien entendu prévoir que la patte 124 soit venue de matière avec la bride de fixation 22, ou soit solidarisée à cette dernière, par exemple au moyen des écrous 30 de fixation de la bride 22 sur la paroi avant de l'enveloppe 15.

Comme dans le mode de réalisation précédent, lors d'une collision frontale ou quasi-frontale du véhicule équipé d'un tel ensemble de freinage, résultant en une interférence avec un élément du compartiment avant C, et en une rotation du maître-cylindre autour d'un axe de rotation situé sensiblement dans la zone de la bride de fixation 22, l'extrémité 126 de la patte 124 va d'abord se rapprocher de la paroi avant de l'enveloppe 15 du servomoteur, puis entrer en contact avec cette dernière, qui va alors se déformer localement de façon très importante, facilitant ainsi une rotation plus importante du servomoteur.

De même, la forme usinée en poinçon de l'extrémité 126 lui confère un caractère fortement agressif envers la paroi avant de l'enveloppe 15 du servomoteur si la rotation du maître-cylindre se poursuit, et cette paroi avant va alors se perforer, permettant la pénétration de l'extrémité 126 à l'intérieur du servomoteur, et constituant une amorce de déchirure facilitant encore plus une rotation supplémentaire du maître-cylindre par rapport au servomoteur.

Ce second mode de réalisation est plus particulièrement destiné aux cas où l'interférence d'un élément étranger sur le corps du maître-cylindre a une probabilité très grande de provenir d'une direction prédéterminée, par exemple selon la flèche A sur la Figure 2. La patte 126 sera alors diamétralement opposée, par rapport à l'axe X-X', à cette direction A. II sera bien sûr néanmoins possible de disposer plusieurs pattes 124 solidaires de la bride°de fixation 22, dans plusieurs directions radiales.

On voit donc encore qu'avec ce mode de réalisation, la rotation du maître-cylindre par rapport au servomoteur se trouve facilitée, et que l'élément du compartiment avant C qui était venu interférer avec le maître-cylindre 12 peut reculer d'une distance supplémentaire vers le tablier, avant d'interagir avec le tablier, le maître-cylindre s'effaçant en quelque sorte sur son passage, et absorbant en même temps une certaine partie de l'énergie résultant de la collision.

Le second mode de réalisation présente de plus l'avantage que la ou les pattes 124 pourront être disposées de telle façon qu'elles soient placées sur le chemin probable d'un élément du compartiment avant C venant interférer avec la paroi avant du servomoteur sans être entré en contact avec le maître-cylindre. Cet élément du compartiment avant C interférera alors directement avec une patte 124, ce qui provoquera également une déformation localisée de la paroi avant du servomoteur, avec perforation et déchirure de cette paroi, avec les effets et avantages que l'on a décrits.

Bien entendu, l'invention n'est pas limitée aux modes de réalisation qui ont été décrits, mais elle est susceptible au contraire de recevoir de nombreuses modifications qui apparaîtront à l'homme du métier, et qui rentrent dans le cadre des revendications annexées.

## Revendications

1. Ensemble d'un servomoteur pneumatique d'assistance au freinage (10) d'un véhicule automobile et d'un maître-cylindre (12), le servomoteur pneumatique (10) comportant une enveloppe (15) fixée sur une paroi (16) séparant l'habitacle (H) d'un compartiment avant (C) d'un véhicule, et étant actionné par une tige de commande (18) dont l'extrémité arrière est reliée à une pédale de freinage située dans l'habitacle (H), le maître-cylindre comportant un corps (20) formé avec au moins une bride de fixation (22) du maître-cylindre (10) sur la paroi avant de l'enveloppe (15), **caractérisé en ce que** cet ensemble (10,12) comporte en outre au moins un élément agressif (26,126) pour l'enveloppe (15) du servomoteur lors d'une rotation du maître-cylindre (12) par rapport au servomoteur (10) sous l'effet d'un couple de rotation appliqué au maître-cylindre (12) en réponse à une sollicitation importante de ce dernier.

2. Ensemble selon la revendication 1, **caractérisé en ce que** le maître-cylindre (12) comporte au moins une aile (24) dont une extrémité (26) forme l'élément agressif (26) pour l'enveloppe (15) du servomoteur (10).

3. Ensemble selon la revendication 2, **caractérisé en ce que** l'élément agressif (26) de l'aile (24) forme une pointe ou un biseau dirigé vers l'enveloppe (15) du servomoteur (10).

4. Ensemble selon la revendication 3, **caractérisé en ce que** l'élément agressif (26) de l'aile (24) est situé au voisinage de la paroi avant de l'enveloppe (15) du servomoteur (10) et écarté de l'axe de symétrie (X-X') du maître-cylindre (12)

5. Ensemble selon l'une des revendication 2 à 4, **caractérisé en ce que** l'aile (24) comporte un bord extérieur (28) reliant l'élément agressif (26) à une région du corps (20) située en avant du plan contenant les extrémités (26).

6. Ensemble selon la revendication 5, **caractérisé en ce que** le bord extérieur (28) de l'aile (24) relie l'élément agressif (26) à l'extrémité avant du corps (20) du maître-cylindre (12).

7. Ensemble selon la revendication 1, **caractérisé en ce que** la bride de fixation (22) du maître-cylindre (12) comporte au moins une patte radiale (124) dont l'extrémité radialement extérieure (126) forme l'élément agressif (126) pour l'enveloppe (15) du servomoteur (10).

8. Ensemble selon la revendication 7, **caractérisé en ce que** l'élément agressif (126) de la patte radiale (124) forme une pointe (126) ou un poinçon (126) de longueur (L) prédéterminée dans le sens circonférentiel.

9. Ensemble selon la revendication 8, **caractérisé en ce que** l'élément agressif (126) de la patte radiale (124) est situé au voisinage de la paroi avant de l'enveloppe (15) du servomoteur (10) et écarté de l'axe de symétrie (X-X') du maître-cylindre (12).

## Claims

1. Motor vehicle master cylinder (12) and pneumatic brake booster (10) assembly, the pneumatic booster (10) including a casing (15) fastened to a wall (16) separating the cabin (H) from a front compartment (C) of a vehicle, and being actuated by a control rod (18), the rear end of which is connected to a brake pedal situated in the cabin (H), the master cylinder including a body (20) formed with at least one flange (22) for fastening the master cylinder (10) onto the front wall of the casing (15), **characterized in that** this assembly (10, 12) further includes at least one aggressive element (26, 126) for the casing (15) of the booster when the master cylinder (12) rotates relative to the booster (10) under the effect of a torque applied to the master cylinder (12) in response to the latter being acted upon strongly.

2. Assembly according to Claim 1, **characterized in that** the master cylinder (12) includes at least one wing (24), one end (26) of which forms the aggressive element (26) for the casing (15) of the booster (10).

3. Assembly according to Claim 2, **characterized in that** the aggressive element (26) of the wing (24) forms a point or chamfer pointing toward the casing (15) of the booster (10).

4. Assembly according to Claim 3, **characterized in that** the aggressive element (26) of the wing (24) is situated close to the front wall of the casing (15) of the booster (10) and away from the axis of symmetry (X-X') of the master cylinder (12).

5. Assembly according to one of Claims 2 to 4, **characterized in that** the wing (24) includes an outer edge (28) connecting the aggressive element (26) to a region of the body (20) situated forward of the plane containing the ends (26).

6. Assembly according to Claim 5, **characterized in that** the outer edge (28) of the wing (24) connects the aggressive element (26) to the front end of the body (20) of the master cylinder (12).

7. Assembly according to Claim 1, **characterized in that** the flange (22) for fastening the master cylinder (12) includes at least one radial tab (124), the radially outer end (126) of which forms the aggressive element (126) for the casing (15) of the booster (10).

8. Assembly according to Claim 7, **characterized in that** the aggressive element (126) of the radial tab (124) forms a point (126) or a punch (126) of length (L) which length is predetermined in the circumferential direction.

9. Assembly according to Claim 8, **characterized in that** the aggressive element (126) of the wing [sic] (124) is situated close to the front wall of the casing (15) of the booster (10) and away from the axis of symmetry (X-X') of the master cylinder (12).

## Patentansprüche

1. Einheit aus einem pneumatischen Servomotor (10) zur Bremsunterstützung und einem Hauptzylinder (12), wobei der pneumatische Servomotor (10) ein Gehäuse (15) aufweist, das an einer den Fahrzeuginnenraum (H) von einem vorderen Raum (C) des Fahrzeugs trennenden Wand (16) befestigt ist, und wobei er durch eine Steuerstange (18) betätigt wird, deren hinteres Ende mit einem im Fahrzeuginnenraum (H) befindlichen Bremspedal verbunden ist, wobei der Hauptzylinder einen Körper (20) enthält, der mit zumindest einem Flansch (22) zur Befestigung des Hauptzylinders (12) an der vorderen Wand des Gehäuses (15) gebildet ist, **dadurch gekennzeichnet, daß** diese Einheit (10, 12) ferner zumindest ein Element (26, 126) zum Angreifen am Gehäuse (15) des Servomotors bei einer Drehung des Hauptzylinders (12) relativ zum Servomotor (10) unter der Wirkung eines in den Hauptzylinder (12) eingeleiteten Drehmoments als Antwort auf eine hohe Beaufschlagung dieses letztgenannten enthält.

2. Einheit nach Anspruch 1, **dadurch gekennzeichnet, daß** der Hauptzylinder (12) zumindest einen Flügel (24) aufweist, von dem ein Ende (26) das Element (26) zum Angreifen am Gehäuse (15) des Servomotors (10) bildet.

3. Einheit nach Anspruch 2, **dadurch gekennzeichnet, daß** das Angriffselement (26) des Flügels (24) eine Spitze oder eine Schräge bildet, die zum Gehäuse (15) des Servomotors (10) hin gerichtet ist.

4. Einheit nach Anspruch 3, **dadurch gekennzeichnet, daß** das Angriffselement (26) des Flügels (24) zur vorderen Wand des Gehäuses (15) des Servomotors (10) benachbart ist und von der Symmetrieachse (X-X') des Hauptzylinders (12) entfernt liegt.

5. Einheit nach einem der Ansprüche 2 bis 4, **dadurch gekennzeichnet, daß** der Flügel (24) einen Außenrand (28) aufweist, der das Angriffselement (26) mit einem Bereich des Körpers (20) verbindet, der sich vor der die Enden (26) enthaltenden Ebene befindet.

6. Einheit nach Anspruch 5, **dadurch gekennzeichnet, daß** der Außenrand (28) des Flügels (24) das Angriffselement (26) mit dem vorderen Ende des Körpers (20) des Hauptzylinders (12) verbindet.

7. Einheit nach Anspruch 1, **dadurch gekennzeichnet, daß** der Befestigungsflansch (22) des Hauptzylinders (12) zumindest eine radial verlaufende Lasche (124) enthält, deren radial äußeres Ende (126) das Element (126) zum Angreifen des Gehäuses (15) des Servomotors (10) bildet.

8. Einheit nach Anspruch 7, **dadurch gekennzeichnet, daß** das Angriffselement (126) der radialen Lasche (124) eine Spitze (126) oder einen Dorn (126) mit in Umfangsrichtung vorbestimmter Länge (L) bildet.

9. Einheit nach Anspruch 8, **dadurch gekennzeichnet, daß** das Angriffselement (126) der radialen Lasche (124) sich benachbart zur vorderen Wand des Gehäuses (15) des Servomotors (10) befindet und von der Symmetrieachse (X-X') des Hauptzylinders (12) entfernt liegt.
